# EUROPÄISCHE PATENTANMELDUNG

(11) **EP 4 722 083 A1**
(43) Veröffentlichungstag der Anmeldung: **08.04.2026**
(21) Anmeldenummer: 25205945.6
(22) Anmeldetag: 01.10.2025
(51) Int. Cl.: B62D 21/20, B62D 53/06

(54) **SYSTEM ZUR BEREITSTELLUNG EINES ANHÄNGERS, ANHÄNGER SOWIE VERFAHREN ZUR HERSTELLUNG EINES ANHÄNGERS**

(30) Priorität: 04.10.2024 DE 102024209728
(71) Anmelder: Scheuerle Fahrzeugfabrik GmbH, 74629 Pfedelbach (DE)
(72) Erfinder: Schmidt, Oliver, 74629 Pfedelbach (DE); Ziegler, Jochen, 74629 Pfedelbach (DE)
(74) Vertreter: Ullrich & Naumann PartG mbB

(57) **Zusammenfassung**

Ein System zur Bereitstellung eines Anhängers, beispielsweise eines Sattelanhängers oder eines Anhängers mit Zuggabel, insbesondere mit einer Nutzlast von mehr als 30 Tonnen, vorzugsweise mit einer Nutzlast im Bereich von 30 Tonnen bis 100 Tonnen, vorzugsweise von 30 Tonnen bis 80 Tonnen, mit einem Rahmen (1) umfassend einen Ladeflächenbereich (2), mindestens einer Achse (3) zur Aufnahme von Rädern, einem Schwanenhals (5), und mindestens zwei Auflageelementen (6, 6') umfassend einen Ladeflächenbereich (7, 7'), wobei der Rahmen (1) und die mindestens eine Achse (3) jeweils eine Befestigungseinrichtung (9') aufweisen, um die mindestens eine Achse (3) mittelbar oder unmittelbar form- und/oder kraftschlüssig mit dem Rahmen (1) zu verbinden, wobei der Rahmen (1) und der Schwanenhals (5) jeweils eine Befestigungseinrichtung (10, 10') aufweisen, um den Schwanenhals (5) mittelbar oder unmittelbar form- und/oder kraftschlüssig mit dem Rahmen (1) zu verbinden, und wobei der Rahmen (1) und die mindestens zwei Auflageelementen (6, 6') jeweils eine Befestigungseinrichtung (13, 13') aufweisen, um die mindestens zwei Auflageelemente (6, 6') mittelbar oder unmittelbar form- und/oder kraftschlüssig mit dem Rahmen (1) zu verbinden, so dass der Ladeflächenbereich (2) des Rahmens (1) und die Ladeflächenbereiche (7, 7') der Auflageelemente (6, 6') eine gemeinsame Ladefläche bilden. Des Weiteren sind ein Sattelanhänger sowie ein Verfahren zur Herstellung eines Sattelanhängers beschrieben.

## Beschreibung

Die Erfindung betrifft ein System zu Bereitstellung eines Anhängers.

Des Weiteren betrifft die Erfindung einen Anhänger.

Weiterhin betrifft die Erfindung ein Verfahren zu Herstellung eines Anhängers.

Anhänger, beispielsweise Sattelanhänger, sind seit Jahren aus der Praxis bekannt. Sattelanhänger weisen üblicherweise einen Rahmen mit einer Ladefläche auf, der von mindestens einer Achse mit Rädern getragen wird. Des Weiteren ist an dem Rahmen ein Schwanenhals angeordnet, um den Sattelanhänger an einer entsprechenden Kupplungseinrichtung eines Zugfahrzeugs anzuordnen. Um die Ladung auf einfache Weise auf die Ladefläche zu verbringen, ist es des Weiteren aus der Praxis bekannt, an dem rückseitigen Ende des Rahmens Rampen anzuordnen. Somit kann beispielsweise ein zu transportierendes Fahrzeug auf die Ladefläche auffahren.

Für den Fall, dass größer dimensionierte Lasten aufgenommen werden sollen, ist es des Weiteren bekannt, seitlich an dem Rahmen Auflageelemente anzubringen, so dass die Ladefläche vergrößert wird.

Durch die bekannten Anhänger ist es somit möglich, unterschiedlichste Lasten auf sichere Weise zu transportieren.

Ein Nachteil der bekannten Anhänger besteht jedoch darin, dass diese als solche schwer zu transportieren sind. Hierzu ist es beispielsweise notwendig, den Anhänger mit einem Zugfahrzeug zu verbinden, so dass das Gespann als solches zu dem Zielort verbracht werden kann. Sofern es sich um einen weit entfernten Zielort handelt, kann es notwendig sein, den Anhänger beispielsweise mittels eines Frachtschiffs o.ä. zu transportieren. Aufgrund der Größe des Anhängers ist ein solcher Transport aufwändig und somit teuer.

Der vorliegenden Erfindung liegt daher die Aufgabe zugrunde, ein System zur Bereitstellung eines Anhängers und einen Anhänger anzugeben, welche eine einfachere Handhabung ermöglichen. Des Weiteren soll ein verbessertes Verfahren zur Herstellung eines Anhängers angegeben werden.

Erfindungsgemäß wird die voranstehende Aufgabe in Bezug auf das System durch die Merkmale des Anspruches 1 gelöst. Damit ist ein System zur Bereitstellung eines Anhängers, beispielsweise eines Sattelanhängers oder eines Anhängers mit Zuggabel, insbesondere mit einer Nutzlast von mehr als 30 Tonnen, vorzugsweise mit einer Nutzlast im Bereich von 30 Tonnen bis 100 Tonnen, vorzugsweise von 30 Tonnen bis 80 Tonnen, mit einem Rahmen umfassend einen Ladeflächenbereich, mindestens einer Achse zur Aufnahme von Rädern, einem Schwanenhals, und mindestens zwei Auflageelementen umfassend einen Ladeflächenbereich, beansprucht, wobei der Rahmen und die mindestens eine Achse jeweils eine Befestigungseinrichtung aufweisen, um die mindestens eine Achse mittelbar oder unmittelbar form- und/oder kraftschlüssig mit dem Rahmen zu verbinden, wobei der Rahmen und der Schwanenhals jeweils eine Befestigungseinrichtung aufweisen, um den Schwanenhals mittelbar oder unmittelbar form- und/oder kraftschlüssig mit dem Rahmen zu verbinden, und wobei der Rahmen und die mindestens zwei Auflageelemente jeweils eine Befestigungseinrichtung aufweisen, um die mindestens zwei Auflageelemente mittelbar oder unmittelbar form- und/oder kraftschlüssig mit dem Rahmen zu verbinden, so dass der Ladeflächenbereich des Rahmens und die Ladeflächenbereiche der Auflageelemente eine gemeinsame Ladefläche bilden.

In Bezug auf den Anhänger wird die zugrundeliegende Aufgabe durch die Merkmale des nebengeordneten Anspruchs 11 gelöst. Damit ist ein Anhänger hergestellt mit einem System nach einem der Ansprüche 1 bis 10 beansprucht, wobei der Rahmen mit der mindestens einen Achse mittelbar oder unmittelbar form- und/oder kraftschlüssig verbunden ist, wobei der Rahmen mit dem Schwanenhals mittelbar oder unmittelbar form- und/oder kraftschlüssig verbunden ist, und wobei der Rahmen mit dem mindestens einen Auflageelement mittelbar oder unmittelbar form- und/oder kraftschlüssig verbunden ist.

In Bezug auf das Verfahren wird die zugrundeliegende Aufgabe durch die Merkmale des nebengeordneten Anspruchs 13 gelöst. Damit ist ein Verfahren zur Herstellung eines Anhängers unter Nutzung eines Systems nach einem der Ansprüche 1 bis 10 beansprucht, umfassend die folgenden Verfahrensschritte:
- Erzeugung einer mittelbaren oder unmittelbaren form- und/oder kraftschlüssigen Verbindung zwischen dem Rahmen und der mindestens einen Achse,
- Erzeugung einer mittelbaren oder unmittelbaren form- und/oder kraftschlüssigen Verbindung zwischen dem Rahmen und dem Schwanenhals,
- Erzeugung einer mittelbaren oder unmittelbaren form- und/oder kraftschlüssigen Verbindung zwischen dem Rahmen und dem mindestens einen Auflageelement.

In erfindungsgemäßer Weise ist zunächst erkannt worden, dass ein Problem der bekannten Anhänger darin besteht, dass diese bereits durch die Verbringung von dem Hersteller zu dem Kunden erhebliche Transportkosten verursachen können, je nachdem, wie weit die Transportstrecke ist. Dies gilt insbesondere für Anhänger, welche hohe Nutzlasten, beispielsweise von mehr als 30 Tonnen, insbesondere im Bereich von 30 Tonnen bis 100 Tonnen, vorzugsweise von 30 Tonnen bis 80 Tonnen, aufweisen. In weiter erfindungsgemäßer Weise ist dabei erkannt worden, dass sich diese Transportkosten erheblich verringern lassen, indem die wesentlichen Bestandteile des Anhängers nicht bereits im Werk miteinander verschweißt werden, sondern jeweils Befestigungseinrichtungen aufweisen, mittels derer die Teile form- und/oder kraftschlüssig miteinander verbunden werden können. Mit anderen Worten können zumindest der Rahmen, die mindestens eine Achse, der Schwanenhals und die mindestens zwei Auflageelement vereinzelt, d.h. nicht miteinander verbunden, vorliegen. Sofern das System weitere Bestandteile aufweist, können auch diese in vorteilhafter Weise vereinzelt vorliegen. Somit können in raffinierter Weise die Bestandteile des Systems, welche aufgrund ihrer Größe wesentlich einfacher und mit einem geringeren Packmaß transportiert werden können, zu dem Bestimmungsort versendet werden, und an diesem sodann zusammengesetzt bzw. miteinander verbunden werden. Insbesondere kann es ermöglicht werden, das System und somit den daraus zusammensetzbaren Anhänger containerfähig zu machen, d.h. in einem Standardcontainer zu transportieren, Dabei kann es vorteilhaft sein, dass zumindest einige der Bestandteile des Systems oder sämtliche Bestandteile lösbar miteinander verbunden sind bzw. verbunden werden, so dass der bereits montierte Anhänger für einen abermaligen Transport leicht demontiert werden kann. Gemäß einer weiteren vorteilhaften Ausgestaltung sind keine lösbaren Verbindungen, sondern "feste" Verbindungen der Einzelteile des Systems vorgesehen, d.h. Verbindungen, die sich nicht zerstörungsfrei lösen lassen. Dies kann den Vorteil haben, dass nach einer Montage des Anhängers dieser lediglich einmalig im Hinblick auf die korrekte Montage überprüft werden muss und sodann lediglich eine übliche Wartung, nicht jedoch zwangsweise eine Prüfung der Verbindungen zu erfolgen hat.

Es wird darauf hingewiesen, dass das erfindungsgemäße System bzw. der erfindungsgemäße Anhänger verfahrensmäßig ausgeprägte Merkmale aufweisen kann. Diese in den abhängigen Ansprüchen, in der allgemeinen Beschreibung sowie in der Figurenbeschreibung offenbarten Merkmale und die damit erzielten Vorteile können ausdrücklich Teil des erfindungsgemäßen Verfahrens sein. Des Weiteren ist wesentlich, dass Anspruch 13 keine explizite Reihenfolge der enthaltenen Verfahrensschritte vorgibt, so dass die Schritte des erfindungsgemäßen Verfahrens in einer beliebigen Reihenfolge durchgeführt werden können.

Im Rahmen dieser Offenbarung, insbesondere in der Beschreibung und in den Ansprüchen, ist der Ausdruck "mittelbare Verbindung" dahingehend zu verstehen, dass ein erstes und ein zweites Element jeweils an mindestens einem weiteren Element angeordnet und nicht direkt miteinander verbunden sind, so dass die Verbindung zwischen dem ersten Element und dem zweiten Element über das Zwischenelement erfolgt.

Im Rahmen dieser Offenbarung, insbesondere in der Beschreibung und in den Ansprüchen, ist der Ausdruck "Befestigungseinrichtung" im weitesten Sinne zu verstehen und könnte soweit nicht näher definiert auch durch das zu befestigende Bauteil als solches ausgebildet sein, an welches das weitere Bauteil beispielsweise eingehängt ist.

In vorteilhafter Weise können der Rahmen und die Auflageelemente bzw. deren Befestigungseinrichtungen derart ausgebildet sein, dass der Ladeflächenbereich des Rahmens und die Ladeflächenbereiche der Auflageelemente bündig miteinander abschließen. Dadurch ist eine gemeinsame Ladefläche geschaffen, die keinen "Sprung" aufweist, sondern "eben" ausgebildet ist. Alternativ können der Rahmen und die Auflageelemente bzw. deren Befestigungseinrichtungen derart ausgebildet sein, dass der Ladeflächenbereich zumindest eines der Auflageelemente, insbesondere mehrerer oder aller Auflageelemente, nach unten versetzt ist/sind. Mit anderen Worten könnte bei einem aus dem System zusammengesetzten Anhänger, der auf einem Untergrund angeordnet ist, zumindest der Ladeflächenbereich eines der Auflageelemente in Richtung des Untergrunds versetzt sein. Dadurch ist eine gemeinsame Ladefläche geschaffen, die einen "Sprung" aufweist, so dass beispielsweise ein zu transportierendes Fahrzeug auf der gemeinsamen Ladefläche "tief geladen" werden kann. Dabei ist es denkbar, dass der Ladeflächenbereich mindestens eines Auflageelements im Bereich von 1 cm bis 60 cm nach unten versetzt zu dem Ladeflächenbereich des Rahmens verläuft.

Gemäß einer vorteilhaften Ausgestaltung kann das System mindestens einen Heck-Querträger aufweisen, wobei der Rahmen und der mindestens eine Heck-Querträger jeweils eine Befestigungseinrichtung umfassen können, um den Heck-Querträger mittelbar oder unmittelbar form- und/oder kraftschlüssig mit dem Rahmen zu verbinden,

In vorteilhafter Weise kann das System mindestens eine Rampe umfassen, wobei der Rahmen und/oder der Heck-Querträger sowie die mindestens eine Rampe jeweils eine Befestigungseinrichtung aufweisen können, um die mindestens eine Rampe mittelbar oder unmittelbar form- und/oder kraftschlüssig mit dem Rahmen und/oder dem Heck-Querträger, vorzugsweise drehbar, zu verbinden. Durch diese konstruktive Maßnahme ist es möglich, eine zu transportierende Last, beispielsweise ein Fahrzeug auf einfache Weise auf die von dem Rahmen und den Auflageelementen gebildete Ladefläche zu verbringen. Des Weiteren kann durch die Befestigungseinrichtungen das System umfassend die Rampen auf einfache Weise transportiert und am Bestimmungsort zusammengesetzt werden.

In weiter vorteilhafter Weise kann die Befestigungseinrichtung der Achse, beispielsweise eine U-Schraube oder ein Bolzen, dazu ausgebildet sein, eine form- und/oder kraftschlüssige Verbindung mit einer mit dem Rahmen verbindbaren Federeinrichtung, beispielsweise einer Blattfeder, herzustellen, so dass die Achse über die Federeinrichtung als Zwischenelement mittelbar mit dem Rahmen verbindbar ist. Dabei könnte die Blattfeder in dem System als Einzelteil, mit dem Rahmen verbunden oder mit der Achse verbunden vorliegen. Alternativ oder zusätzlich kann die Befestigungseinrichtung der Achse, beispielsweise eine am Achsrohr ausgebildete Aufnahme, mindestens eine Öffnung aufweisen, um die Achse unmittelbar, beispielsweise mittels Schrauben und/oder Bolzen, mit dem Rahmen zu verbinden. Unabhängig von der Ausgestaltung der Befestigungseinrichtungen können zwei Achsen oder mehr als zwei Achsen vorgesehen sein, um eine ausreichend große Nutzlast, insbesondere von mehr als 30, vorzugsweise im Bereich von 30 Tonnen bis 100 Tonnen, beispielsweise von 30 Tonnen bis 80 Tonnen, transportieren zu können.

Gemäß einer vorteilhaften Ausgestaltung können die entsprechenden Befestigungseinrichtungen von Rahmen und Schwanenhals jeweils mindestens eine, vorzugsweise innerhalb von Lamellen und/oder an einem Flansch ausgebildete, Öffnung aufweisen, beispielsweise um den Rahmen mittels Schrauben und/oder Bolzen und/oder Schliessringbolzen mit dem Schwanenhals zu verbinden. Die Ausgestaltung einer solchen Lamellenkupplung hat den Vorteil, dass auf einfache Weise eine sichere Verbindung zwischen Rahmen und Schwanenhals herstellbar ist. Generell handelt es sich bei dem Schwanenhals um den in Fahrtrichtung gesehen vorderen Teil des Anhängers, an dem beispielsweise ein Königszapfen ausgebildet sein könnte, mit dem der Anhänger mit der Zugmaschine gekoppelt werden kann. Alternativ könnte eine Zuggabel vorgesehen sein.

In weiter vorteilhafter Weise können die entsprechenden Befestigungseinrichtungen von dem Rahmen und den mindestens zwei Auflageelementen jeweils mindestens eine Öffnung aufweisen, beispielsweise um den Rahmen mittels Schrauben und/oder Bolzen und/oder Nieten und/oder Schliessringbolzen, mit den mindestens zwei Auflageelementen zu verbinden. Dadurch kann mit technisch einfachen Mitteln eine sichere Verbindung zwischen den Bauteilen realisiert werden. Alternativ oder zusätzlich können die entsprechende Befestigungseinrichtung an dem Rahmen eine hakenförmige Aufnahme aufweist, die im verbundenen Zustand von der der Ladefläche abgewandte Seite an einem Vorsprung und/oder einem Bolzen der Befestigungseinrichtung des Auflageelements eingeschoben wird und an diesem hintergreift, um eine formschlüssige Verbindung zu realisieren. Somit ist eine Einhängung zur formschlüssigen Verbindung geschaffen, wobei vorzugsweise auf der der Ladefläche abgewandten Seite eine Druckleiste vorgesehen ist.

Gemäß einer vorteilhaften Ausgestaltung können die Befestigungseinrichtungen für die mindestens zwei Auflageelemente an einer ersten Rahmenseite und an einer zweiten Rahmenseite an dem Rahmen ausgebildet sein, so dass mindestens ein Auflageelement an der ersten Rahmenseite und mindestens ein Auflageelement an der zweiten Rahmenseite festlegbar ist. Dadurch kann mit technisch einfachen Mitteln eine sichere Verbindung zwischen den Bauteilen realisiert werden, wobei die Ladefläche durch die Ladeflächenbereiche der Auflageelemente erheblich vergrößert werden kann, um auch ausladende Lasten zu transportieren.

In weiter vorteilhafter Weise können die miteinander korrespondierenden Befestigungseinrichtungen von dem Rahmen und dem mindestens einen Heck-Querträger jeweils mindestens eine Öffnung aufweisen, beispielsweise um den Rahmen mittels Schrauben und/oder Bolzen mit dem mindestens einen Heck-Querträger zu verbinden. Dadurch kann mit technisch einfachen Mitteln eine sichere Verbindung zwischen den Bauteilen realisiert werden.

Gemäß einer vorteilhaften Ausgestaltung können die miteinander korrespondierenden Befestigungseinrichtungen von dem Rahmen bzw. dem mindestens einen Heck-Querträger und der mindestens einen Rampe jeweils mindestens eine Öffnung aufweisen, beispielsweise um den Rahmen bzw. den Heck-Querträger mittels Schrauben und/oder Bolzen mit der mindestens einen Rampe, vorzugsweise drehbar, zu verbinden. Alternativ oder zusätzlich ist es denkbar, dass die Befestigungseinrichtungen von Heck-Querträger und Rahmen jeweils als Lamellen oder Ösen ausgebildet sind. Bei einem Überlappen der Lamellen bzw. Ösen können die Öffnungen fluchten, so dass eine Schraube und/oder ein Bolzen eingebracht werden kann.

In weiter vorteilhafter Weise kann der Rahmen eine Länge im Bereich von 6 m bis 14 m, vorzugsweise von 6 m bis 12 m, und/oder eine Breite im Bereich von 1,5 m bis 3 m, vorzugsweise von 2 m bis 2,5 m, aufweisen. Alternativ oder zusätzlich kann zumindest eine der mindestens einen Auflageelemente eine Länge im Bereich von 1 m bis 3 m, vorzugsweise von 1,5 m bis 2 m, und/oder eine Breite im Bereich von 0,25 m bis 1,25 m, vorzugsweise von 0,5 m bis 1 m, aufweisen. Alternativ oder zusätzlich kann der Schwanenhals eine Länge im Bereich von 3 m bis 4,5 m, vorzugsweise von 3,5 m bis 4 m, und/oder eine Breite im Bereich von 1 m bis 3 m, vorzugsweise von 1,4 m bis 1,8 m, aufweisen. Alternativ oder zusätzlich kann die mindestens einen Achse eine Länge im Bereich von 1,3 m bis 3 m, vorzugsweise von 1,5 m bis 2,5 m, und/oder eine Breite im Bereich von 1,8 m bis 4 m, vorzugsweise von 2,2 m bis 3,4 m, aufweisen. Alternativ oder zusätzlich kann der Heck-Querträger eine Länge im Bereich von 0,15 m bis 0,75 m, vorzugsweise von 0,25 m bis 0,35 m, und/oder eine Breite im Bereich von 2,5 m bis 4 m, vorzugsweise von 3,4 m bis 3,8 m, aufweisen.

Alternativ oder zusätzlich kann die Rampe eine Länge im Bereich von 2 m bis 4 m, vorzugsweise von 2,8 m bis 3,3 m, und/oder eine Breite im Bereich von 0,4 m bis 1,8 m, vorzugsweise von 1 m bis 1,4 m, aufweisen. In besonders vorteilhafter Weise können die Länge, die Breite und ggf. die Höhe der einzelnen Bestandteile des Systems derartig aufeinander abgestimmt sein, dass das System in einem Raum mit einer Kantenlänge von kleiner oder gleich 13,56 m (Länge), kleiner oder gleich 2,36 m (Breite) und kleiner oder gleich 2,70 m (Höhe) angeordnet werden kann, vorzugsweise in einen Container mit einem Innenmaß von 12,032 m (Länge), 2,352 m (Breite) und 2,385 m (Höhe), insbesondere einem 40 Fuß ISO-Container, einem 40 Fuß highcube-Container oder einem 45 Fuß ISO-Container. Dies hat den Vorteil, dass sich das System und somit der Anhänger auf besonders kostengünstige Weise auch über weite Distanzen transportieren lässt und somit besonders einfach zu handhaben ist, da es containerfähig ist.

Gemäß einer vorteilhaften Ausgestaltung können mindestens 4, insbesondere mindestens 6, vorzugsweise mindestens 10 und/oder höchstens 16, vorzugsweise höchstens 14, Auflageelemente angeordnet sein. Die Anordnung von Auflageelementen in der voranstehend genannten Anzahl bietet den Vorteil, dass an beiden Längsseiten des Rahmens Auflageelemente, vorzugsweise über die gesamte Länge des Rahmens, positioniert werden können und gleichzeitig ausreichend kurz ausgebildet sind, so dass sich die einzelnen Auflageelemente auf kleinstem Raum, beispielsweise einem Container, verladen und transportieren lassen.

In weiter vorteilhafter Weise können mindestens zwei Auflageelemente miteinander korrespondierende Befestigungseinrichtungen, insbesondere umfassend Öffnungen, aufweisen, beispielsweise um die Auflageelemente mittels Schrauben und/oder Bolzen und/oder Schliessringbolzen miteinander zu verbinden bzw. kann eine solche Verbindung erzeugt werden. Dadurch wird eine verbesserte Stabilität erzielt, so dass eine Ladefläche geschaffen ist, die auch für hohe Nutzlasten, insbesondere von mehr als 30 Tonnen, insbesondere im Bereich von 30 Tonnen bis 100 Tonnen, vorzugsweise von 30 Tonnen bis 80 Tonnen, geeignet ist.

In vorteilhafter Weise können an einer ersten Rahmenseite und an einer zweiten Rahmenseite jeweils mindestens zwei Auflageelemente in angeordnet sein, wobei die in Fahrtrichtung gesehen hintereinander angeordneten Auflageelemente miteinander abschließen können, so dass eine durchgehende Auflagefläche gebildet ist. Gemäß einer alternativen Ausgestaltung können die in Fahrtrichtung gesehen hintereinander angeordneten Auflageelemente beabstandet voneinander angeordnet sein, so dass eine Auflagefläche mit Unterbrechungen gebildet ist

Es gibt nun verschiedene Möglichkeiten, die Lehre der vorliegenden Erfindung in vorteilhafter Weise auszugestalten und weiterzubilden. Dazu ist einerseits auf die den Ansprüchen 1, 11 und 13 nachgeordneten Ansprüche und andererseits auf die nachfolgende Erläuterung bevorzugter Ausführungsbeispiele der Erfindung anhand der Zeichnung zu verweisen. In Verbindung mit der Erläuterung der bevorzugten Ausführungsbeispiele der Erfindung anhand der Zeichnung wird auch der erfindungsgemäße Anhänger sowie das erfindungsgemäße Verfahren und im Allgemeinen bevorzugte Ausgestaltungen und Weiterbildungen der Lehre erläutert. In der Zeichnung zeigen
- Fig. 1: in einer perspektivischen Ansicht ein Ausführungsbeispiel eines erfindungsgemäßen Systems,
- Fig. 2: eine vergrößerte Teilansicht von Fig. 1 zur Darstellung der Verbindung von Rahmen und Achse,
- Fig. 3: eine vergrößerte Detailansicht des Ausführungsbeispiels von Fig. 1 in einer anderen Perspektive zur Darstellung der Verbindung von Rahmen und Schwanenhals,
- Fig. 4: eine weitere vergrößerte Detailansicht von Fig. 1 zur Darstellung der Verbindung von Rahmen und Auflageelement,
- Fig. 5: eine weitere vergrößerte Detailansicht von Fig. 1 zur Darstellung der Verbindung von Rahmen und Heck-Querträger,
- Fig. 6: eine weitere vergrößerte Detailansicht von Fig. 1 zur Darstellung der Verbindung von Heck-Querträger und Rampe,
- Fig. 7: in einer perspektivischen Ansicht einen Anhänger hergestellt mit dem System gemäß Fig. 1, und
- Fig. 8: ein Ablaufdiagramm eines Ausführungsbeispiel eines erfindungsgemäßen Verfahrens.

In den Figuren ist zur Verbesserung der Übersichtlichkeit nicht jedes Element mit einem Bezugszeichen versehen, wobei gleiche Elemente mit den gleichen Bezugszeichen gekennzeichnet sind.

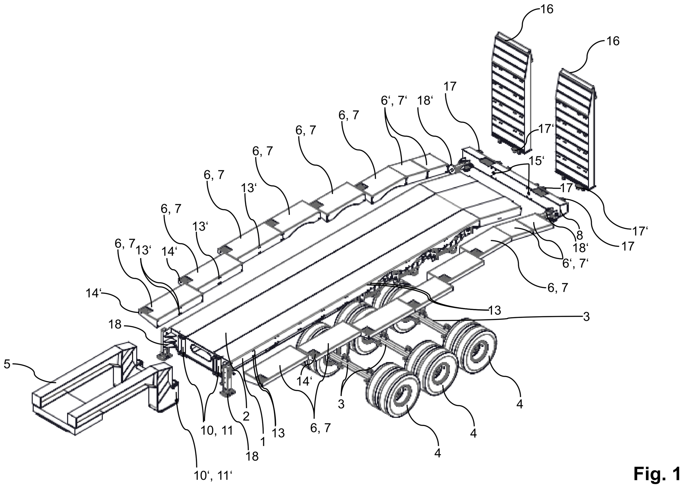

Die Fig. 1 bis 6 zeigen ein Ausführungsbeispiel eines erfindungsgemäßen Systems zur Bereitstellung eines Anhängers, wobei es sich im hier gezeigten Ausführungsbeispiel um einen Sattelanhänger handelt. Dabei könnte es sich auch um einen anderen Typ von Anhänger handeln, beispielsweise einen Anhänger mit Zuggabel. Der Anhänger kann eine Nutzlast im Bereich von mehr als 30 Tonnen, vorzugsweise eine Nutzlast im Bereich von 30 Tonnen bis 100 Tonnen, vorzugsweise von 30 Tonnen bis 80 Tonnen, aufweisen. Das System weist einen Rahmen 1 mit einem Ladeflächenbereich 2, drei Achsen 3 zur Aufnahme von Rädern 4, einen Schwanenhals 5 zur Verbindung mit einer Kupplungseinrichtung eines Zugfahrzeugs, Auflageelemente 6, 6' umfassend jeweils einen Ladeflächenbereich 7, 7' und einen Heck-Querträger 8 auf. Der Heck-Querträger 8 ist in diesem Ausführungsbeispiel einteilig ausgebildet. Es ist jedoch denkbar, dass der Heck-Querträger 8 aus mindestens zwei miteinander verbundenen Teilen besteht oder dass mehrere Heck-Querträger 8 nebeneinander angeordnet sind. Auch kann auf einen Heck-Querträger 8 verzichtet werden oder dieser ggf. einteilig mit dem Rahmen ausgebildet sein.

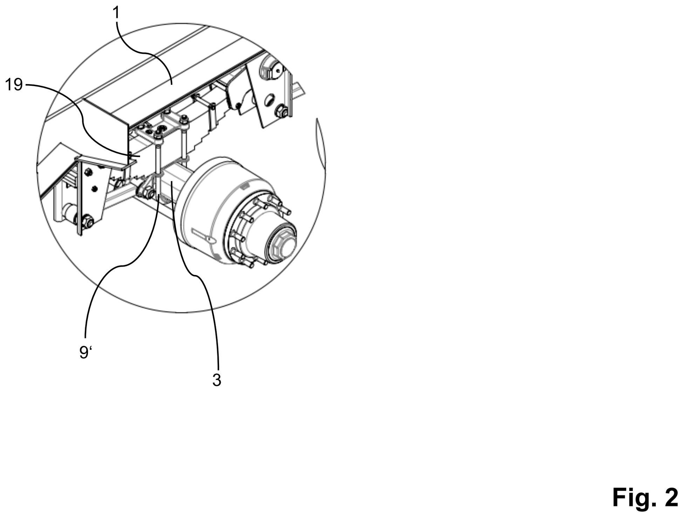

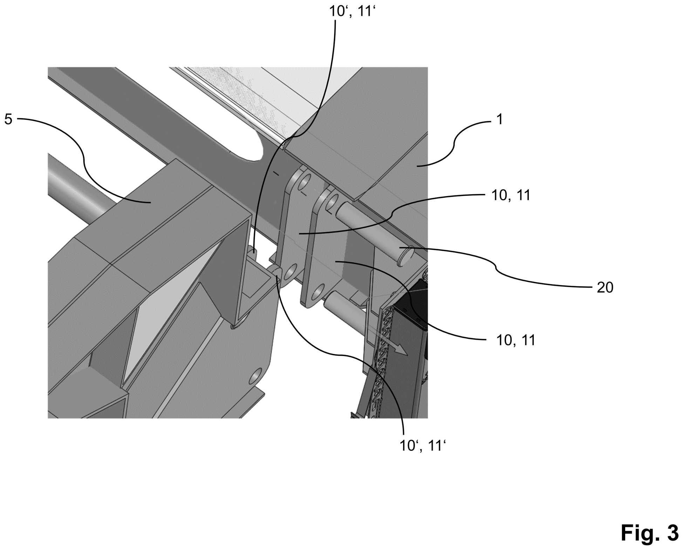

Fig. 1 und 2 zeigen des Weiteren, dass die Achsen 3 Befestigungseinrichtungen 9' aufweisen, die dazu ausgebildet sind, eine form- und/oder kraftschlüssige Verbindung mit einer mit dem Rahmen 1 verbindbaren Blattfeder 19 herzustellen. Somit kann die Achse 3 über die Blattfeder 19 mittelbar mit dem Rahmen 1 verbunden werden. Die Befestigungseinrichtung 9' ist hier als U-Schraube ausgebildet, wobei auch andere Konstruktionen denkbar sind. Des Weiteren kann als Befestigungseinrichtung 9' an der Achse 3, beispielsweise am Achsrohr, eine Aufnahme ausgebildet sein, die mindestens eine Öffnung aufweist, um die Achse 3 unmittelbar mit dem Rahmen 1 zu verbinden. Weiterhin weisen der Rahmen 1 und der Schwanenhals 5 miteinander korrespondierende Befestigungseinrichtungen 10, 10' auf, um eine form- und/oder kraftschlüssige Verbindung herzustellen (vgl. Fig. 1 und 3). Die Befestigungseinrichtungen 10 des Rahmens 1 und die Befestigungseinrichtungen 10' des Schwanenhalses 5 sind jeweils als Lamellen 11, 11' ausgebildet, wobei jede der Lamellen 11, 11' eine Öffnung 12, 12' aufweist. Wenn die Lamellen 11, 11' ineinander geschoben werden fluchten die Öffnungen 12, 12', so dass eine Schraube oder ein Bolzen 20 eingebracht werden kann, um den Schwanenhals 5 mit dem Rahmen 1 zu verbinden. Alternativ zu einer Lamellenkupplung könnte beispielweise eine Verbindung über einen Flansch erfolgen.

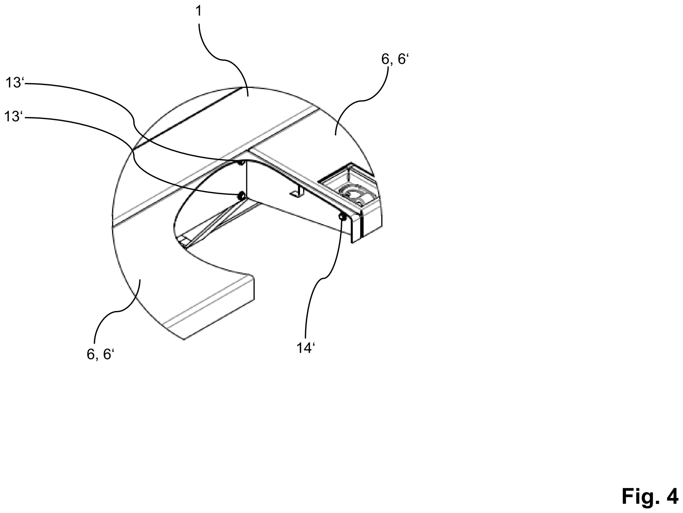

Zusätzlich weisen der Rahmen 1 und die Auflageelemente 6, 6' miteinander korrespondierende Befestigungseinrichtungen 13, 13' auf, die Öffnungen umfassen, um eine form- und/oder kraftschlüssige Verbindung, beispielsweise über Schrauben und/oder Bolzen, und/oder Nieten und/oder Schliessringbolzen, herzustellen (vgl. Fig. 1 und 4). Somit bilden der Ladeflächenbereich 2 des Rahmens 1 und die Ladeflächenbereiche 7, 7' der Auflageelemente 6, 6' eine gemeinsame Ladefläche. Dabei sind die Auflageelemente 6, 6' an beiden Längsseiten des Rahmens 1 anbringbar. Fig. 1 zeigt auch, dass die Auflageelemente 6, 6` zusätzliche Befestigungseinrichtungen 14' umfassen, die derart miteinander korrespondieren, dass ein Auflageelement 6, 6' jeweils mit dem benachbarten Auflageelement 6, 6' verbunden werden kann. Dabei sind die Befestigungseinrichtungen 14' jeweils als Öffnungen, beispielsweise für Schrauben und/oder Bolzen, ausgebildet. Es wird darauf hingewiesen, dass aufgrund der Ansicht von Fig. 1 nicht sämtliche Befestigungseinrichtungen 14' sichtbar sind.

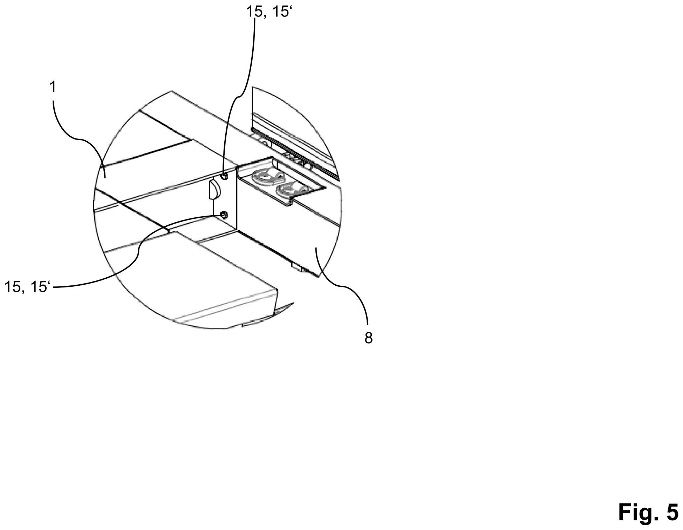

Weiterhin weisen der Rahmen 1 und der Heck-Querträger 8 miteinander korrespondierende Befestigungseinrichtungen 15, 15' auf, um eine Schrauben-Flansch-Verbindung mit einem zusätzlichen Querkraft-aufnehmenden Bolzen 21 zu realisieren (vgl. Fig. 1 und 5). Auch hierbei sind andere Ausgestaltungen der Befestigungseinrichtungen 15, 15' denkbar.

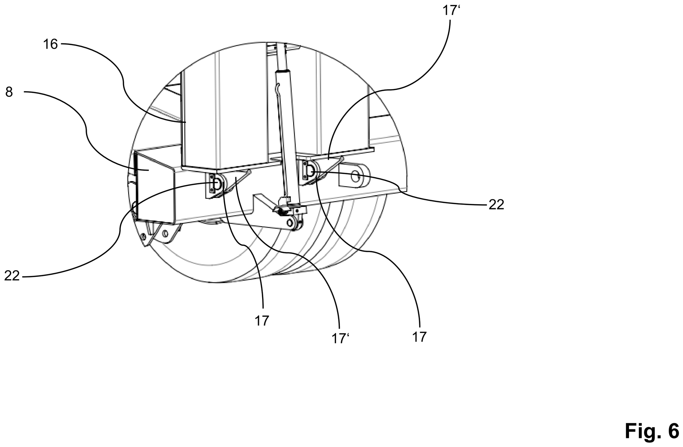

Das System umfasst zusätzlich zwei Rampen 16, wobei diese nicht zwangsweise vorgesehen sein müssen. Der Heck-Querträger 8 und die Rampen 16 weisen miteinander korrespondierende Befestigungseinrichtungen 17, 17' auf (vgl. Fig. 1 und 6). Die Befestigungseinrichtungen 17, 17' sind jeweils als Lamellen bzw. Ösen ausgebildet, welche eine Öffnung aufweisen. Wenn die Lamellen/Ösen ineinandergeschoben angeordnet sind, fluchten die Öffnungen, so dass mittels einer Schraube und/oder eines Bolzens 22 die jeweilige Rampe 16 mit dem Quer-Heckträger 8 verbunden werden kann. Die durch den Rahmen 1 und die Auflageelemente 6' im Heckbereich des Anhängers gebildete Ladefläche fällt in Richtung der Unterseite des Rahmen 1 hin ab, so dass das Auffahren auf die Ladefläche über die Rampen 16 einfacher erfolgen kann.

Des Weiteren können die einzelnen Bestandteile des Systems vorzugsweise von ihren Abmessungen derart dimensioniert sein, dass sie in einem Raum mit einer Kantenlänge von kleiner oder gleich 13,56 m (Länge), kleiner oder gleich 2,36 m (Breite) und kleiner oder gleich 2,70 m (Höhe) angeordnet werden können, beispielsweise in einem Container mit einem Innenmaß von 12,032 m (Länge), 2,352 m (Breite) und 2,385 m (Höhe), insbesondere einem 40 Fuß ISO-Container, einem 40 Fuß highcube-Container oder einem 45 Fuß ISO-Container. Durch eine solche Konstruktion ist das System somit containerfähig und kann auf besonders einfache und kostengünstige Weise transportiert werden.

Zusätzlich sind an dem Rahmen 1 und an dem Heck-Querträger 8 Stützfüße angeordnet, welche vorzugsweise einklappbar und/oder einschiebbar ausgebildet sind. Auch diese müssen nicht vorgesehen sein.

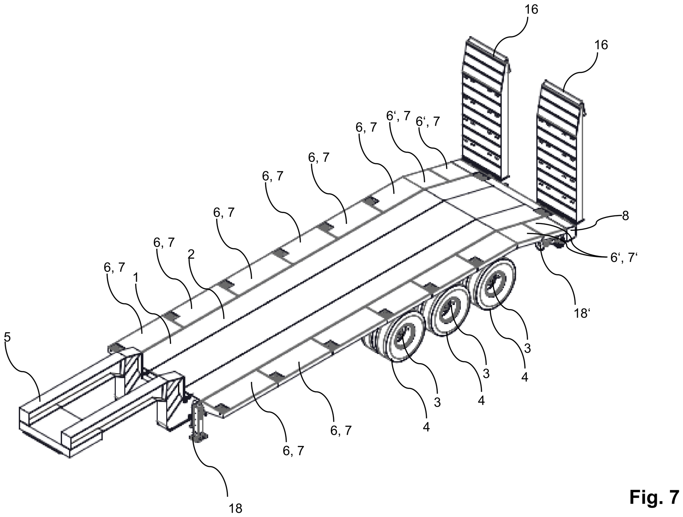

Fig. 7 zeigt einen Anhänger, der mit dem in den Fig. 1 bis 6 dargestellten System hergestellt ist. Dabei sind die Bestandteile des Systems miteinander form- und/oder kraftschlüssig verbunden, so dass der Anhänger einsatzbereit ist. Dies kann beispielsweise erfolgen, nachdem das System zu dem Kunden geliefert worden ist, wobei der hierzu notwendige Transport erheblich einfacher und kostengünstiger erfolgen kann, da die Einzelkomponenten des Systems und nicht der bereits gefertigte Anhänger transportiert wird. Bezüglich der weiteren Beschreibung des Anhängers wird auf die Beschreibung der Fig. 1 bis 5 verwiesen, die analog für Fig. 6 gilt, mit dem Unterschied, dass die Bestandteile des Systems nun miteinander verbunden sind.

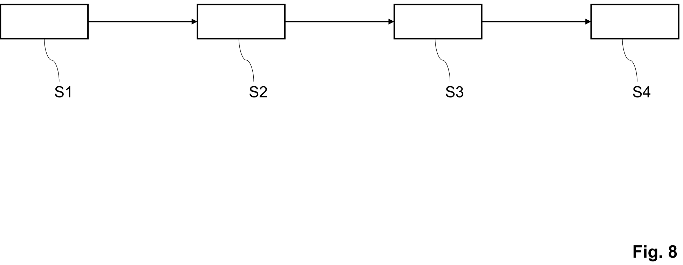

Fig. 8 zeigt ein Ablaufdiagramm eines Ausführungsbeispiel eines erfindungsgemäßen Verfahrens zur Herstellung eines Anhängers unter Nutzung eines erfindungsgemäßen Systems, beispielsweise eines Systems gemäß den Fig. 1 bis 6. Dabei wird in einem Schritt S1 eine unmittelbare oder mittelbare form- und/oder kraftschlüssige Verbindung zwischen dem Rahmen 1 und den Achsen 3 hergestellt. In einem Schritt S2 wird eine unmittelbare oder mittelbare form- und/oder kraftschlüssige Verbindung zwischen dem Rahmen 1 und dem Schwanenhals 5 erzeugt. In einem Schritt S3 wird eine unmittelbare oder mittelbare form- und/oder kraftschlüssige Verbindung zwischen dem Rahmen 1 und dem mindestens einen Auflageelement 6, 6' erzeugt, und in einem Schritt S4 wird eine unmittelbare oder mittelbare form- und/oder kraftschlüssige Verbindung zwischen dem Rahmen 1 und dem mindestens einen Heck-Querträger 8 hergestellt. Es wird ausdrücklich darauf hingewiesen, dass Schritt S4 nicht zwangsweise erfolgen muss, da ggf. kein Heck-Querträger 8 angeordnet ist.

Wesentlich ist dabei, dass die Schritte S1 bis S4 auch in einer beliebigen anderen Reihenfolge durchgeführt werden können.

Hinsichtlich weiterer vorteilhafter Ausgestaltungen der erfindungsgemäßen Lehre wird zur Vermeidung von Wiederholungen auf den allgemeinen Teil der Beschreibung sowie auf die beigefügten Ansprüche verwiesen.

Schließlich sei ausdrücklich darauf hingewiesen, dass die voranstehend beschriebenen Ausführungsbeispiele der erfindungsgemäßen Lehre lediglich zur Erörterung der beanspruchten Lehre dienen, diese jedoch nicht auf die Ausführungsbeispiele einschränken.

### Bezugszeichenliste

- 1: Rahmen
- 2: Ladeflächenbereich
- 3: Achse
- 4: Rad
- 5: Schwanenhals
- 6, 6': Auflageelement
- 7, 7': Ladeflächenbereich
- 8: Heck-Querträger
- 9': Befestigungseinrichtung
- 10, 10': Befestigungseinrichtung
- 11, 11': Lamelle
- 12, 12': Öffnung
- 13, 13': Befestigungseinrichtung
- 14': Befestigungseinrichtung
- 15, 15': Befestigungseinrichtung
- 16: Rampe
- 17, 17': Befestigungseinrichtung
- 18, 18': Stützfuß
- 19: Blattfeder
- 20: Bolzen
- 21: Bolzen
- 22: Bolzen
- S1: Schritt
- S2: Schritt
- S3: Schritt
- S4: Schritt

## Patentansprüche

1. System zur Bereitstellung eines Anhängers, beispielsweise eines Sattelanhängers oder eines Anhängers mit Zuggabel, insbesondere mit einer Nutzlast von mehr als 30 Tonnen, vorzugsweise mit einer Nutzlast im Bereich von 30 Tonnen bis 100 Tonnen, vorzugsweise von 30 Tonnen bis 80 Tonnen, mit einem Rahmen (1) umfassend einen Ladeflächenbereich (2), mindestens einer Achse (3) zur Aufnahme von Rädern, einem Schwanenhals (5), und mindestens zwei Auflageelementen (6, 6') umfassend einen Ladeflächenbereich (7, 7'),
wobei der Rahmen (1) und die mindestens eine Achse (3) jeweils eine Befestigungseinrichtung (9') aufweisen, um die mindestens eine Achse (3) mittelbar oder unmittelbar form- und/oder kraftschlüssig mit dem Rahmen (1) zu verbinden,
wobei der Rahmen (1) und der Schwanenhals (5) jeweils eine Befestigungseinrichtung (10, 10') aufweisen, um den Schwanenhals (5) mittelbar oder unmittelbar form- und/oder kraftschlüssig mit dem Rahmen (1) zu verbinden, und
wobei der Rahmen (1) und die mindestens zwei Auflageelementen (6, 6') jeweils eine Befestigungseinrichtung (13, 13') aufweisen, um die mindestens zwei Auflageelemente (6, 6') mittelbar oder unmittelbar form- und/oder kraftschlüssig mit dem Rahmen (1) zu verbinden, so dass der Ladeflächenbereich (2) des Rahmens (1) und die Ladeflächenbereiche (7, 7') der Auflageelemente (6, 6') eine gemeinsame Ladefläche bilden.

2. System nach Anspruch 1, **dadurch gekennzeichnet, dass** das System mindestens einen Heck-Querträger (8) aufweist, wobei der Rahmen (1) und der mindestens eine Heck-Querträger (8) jeweils eine Befestigungseinrichtung (15, 15') aufweisen, um den Heck-Querträger (8) mittelbar oder unmittelbar form- und/oder kraftschlüssig mit dem Rahmen (1) zu verbinden, und/oder
dass das System mindestens eine Rampe (16) umfasst, wobei der Rahmen (1) und/oder der Heck-Querträger (8) sowie die mindestens eine Rampe (16) jeweils eine Befestigungseinrichtung (17, 17') aufweisen, um die mindestens eine Rampe (16) mittelbar oder unmittelbar form- und/oder kraftschlüssig mit dem Rahmen (1) und/oder dem Heck-Querträger (8), vorzugsweise drehbar, zu verbinden.

3. System nach Anspruch 1 oder 2, **dadurch gekennzeichnet, dass** die Befestigungseinrichtung (9') der Achse (3), beispielsweise eine U-Schraube oder ein Bolzen, dazu ausgebildet ist, eine form- und/oder kraftschlüssige Verbindung mit einer mit dem Rahmen (1) verbindbaren Federeinrichtung, beispielsweise einer Blattfeder (19), herzustellen, so dass die Achse (3) über die Federeinrichtung mittelbar mit dem Rahmen (1) verbindbar ist, und/oder
dass die Befestigungseinrichtung (9') der Achse (3), beispielsweise eine am Achsrohr ausgebildete Aufnahme, mindestens eine Öffnung aufweist, um die Achse (3) unmittelbar, beispielsweise mittels Schrauben und/oder Bolzen, mit dem Rahmen (1) zu verbinden.

4. System nach einem der Ansprüche 1 bis 3, **dadurch gekennzeichnet, dass** die entsprechenden Befestigungseinrichtungen (10, 10') von Rahmen (1) und Schwanenhals (5) jeweils mindestens eine, vorzugsweise innerhalb von Lamellen (11, 11') und/oder an einem Flansch ausgebildete, Öffnung (12, 12') aufweisen, beispielsweise um den Rahmen (1) mittels Schrauben und/oder Bolzen und/oder Schliessringbolzen, mit dem Schwanenhals (5) zu verbinden, insbesondere über eine Lamellenkupplung.

5. System nach einem der Ansprüche 1 bis 4, **dadurch gekennzeichnet, dass** die entsprechenden Befestigungseinrichtungen (13, 13') von dem Rahmen (1) und den mindestens zwei Auflageelementen (6, 6') jeweils mindestens eine Öffnung aufweisen, beispielsweise um den Rahmen (1) mittels Schrauben und/oder Bolzen und/oder Nieten und/oder Schliessringbolzen, mit den mindestens zwei Auflageelementen (6, 6') zu verbinden und/oder
dass die entsprechende Befestigungseinrichtung (13) an dem Rahmen (1) eine hakenförmige Aufnahme aufweist, die im verbundenen Zustand von der der Ladefläche abgewandte Seite an einem Vorsprung und/oder einem Bolzen der Befestigungseinrichtung (13') des Auflageelements (6, 6') eingeschoben wird und an diesem hintergreift, um eine formschlüssige Verbindung zu realisieren.

6. System nach einem der Ansprüche 1 bis 5, **dadurch gekennzeichnet, dass** die Befestigungseinrichtungen (14') für die mindestens zwei Auflageelementen (6, 6') an einer ersten Rahmenseite und an einer zweiten Rahmenseite an dem Rahmen ausgebildet sind, so dass mindestens ein Auflageelement (6, 6') an der ersten Rahmenseite und mindestens ein Auflageelement (6, 6') an der zweiten Rahmenseite festlegbar ist.

7. System nach einem der Ansprüche 1 bis 6, **dadurch gekennzeichnet, dass** die miteinander korrespondierenden Befestigungseinrichtungen (15, 15') von dem Rahmen (1) und dem mindestens einen Heck-Querträger (8) jeweils mindestens eine Öffnung aufweisen, beispielsweise um den Rahmen (1) mittels Schrauben und/oder Bolzen mit dem mindestens einen Heck-Querträger (8) zu verbinden, und/oder dass die miteinander korrespondierenden Befestigungseinrichtungen (15, 15', 17, 17') von dem Rahmen (1) bzw. dem mindestens einen Heck-Querträger (8) und der mindestens einen Rampe (16) jeweils mindestens eine Öffnung aufweisen, beispielsweise um den Rahmen (1) bzw. den Heck-Querträger (8) mittels Schrauben und/oder Bolzen mit der mindestens einen Rampe (16), vorzugsweise drehbar, zu verbinden.

8. System nach einem der Ansprüche 1 bis 7, **dadurch gekennzeichnet, dass** der Rahmen (1) eine Länge im Bereich von 8 m bis 14 m, vorzugsweise von 10 m bis 12 m, und/oder eine Breite im Bereich von 1,5 m bis 3 m, vorzugsweise von 2 m bis 2,5 m, aufweist, und/oder
dass zumindest eine der mindestens einen Auflageelemente (6, 6') eine Länge im Bereich von 1 m bis 3 m, vorzugsweise von 1,5 m bis 2 m, und/oder eine Breite im Bereich von 0,25 m bis 1,25 m, vorzugsweise von 0,5 m bis 1 m, aufweist, und/oder dass der Schwanenhals (5) eine Länge im Bereich von 3 m bis 4,5 m, vorzugsweise von 3,5 m bis 4 m, und/oder eine Breite im Bereich von 1 m bis 3 m, vorzugsweise von 1,4 m bis 1,8 m, aufweist, und/oder
dass die mindestens eine Achse (3) eine Länge im Bereich von 1,3 m bis 3 m, vorzugsweise von 1,5 m bis 2,5 m, und/oder eine Breite im Bereich von 1,8 m bis 5 m, vorzugsweise von 2,2 m bis 3,4 m, aufweist, und/oder
dass der Heck-Querträger (8) eine Länge im Bereich von 0,15 m bis 0,75 m, vorzugsweise von 0,25 m bis 0,35 m, und/oder eine Breite im Bereich von 3 m bis 4 m, vorzugsweise von 3,4 m bis 3,8 m, aufweist, und/oder
dass die Rampe (16) eine Länge im Bereich von 2 m bis 4 m, vorzugsweise von 2,8 m bis 3,3 m, und/oder eine Breite im Bereich von 0,4 m bis 1,8 m, vorzugsweise von 1 m bis 1,4 m, aufweist.

9. System nach einem der Ansprüche 1 bis 8, **dadurch gekennzeichnet, dass** das System mindestens 4, insbesondere mindestens 6, vorzugsweise mindestens 10 und/oder höchstens 16, vorzugsweise höchstens 14, Auflageelemente (6, 6') aufweist, und/oder
dass mindestens zwei Auflageelemente (6, 6') miteinander korrespondierende Befestigungseinrichtungen (14'), insbesondere umfassend Öffnungen, aufweisen, beispielsweise um die Auflageelemente (6, 6') mittels Schrauben und/oder Bolzen und/oder Schliessringbolzen miteinander zu verbinden.

10. System nach einem der Ansprüche 1 bis 9, **dadurch gekennzeichnet, dass** an einer ersten Rahmenseite und an einer zweiten Rahmenseite jeweils mindestens zwei Auflageelemente (6, 6') angeordnet sind, wobei die in Fahrtrichtung gesehen hintereinander angeordneten Auflageelemente (6, 6') miteinander abschließen, so dass eine durchgehende Auflagefläche gebildet ist, oder
dass die in Fahrtrichtung gesehen hintereinander angeordneten Auflageelemente (6, 6') beabstandet voneinander angeordnet sind, so dass eine Auflagefläche mit Unterbrechungen gebildet ist.

11. Anhänger, beispielsweise Sattelanhänger oder Anhänger mit Zuggabel, hergestellt mit einem System nach einem der Ansprüche 1 bis 10, wobei der Rahmen (1) mit der mindestens einen Achse (3) mittelbar oder unmittelbar form- und/oder kraftschlüssig verbunden ist, wobei der Rahmen (1) mit dem Schwanenhals (5) mittelbar oder unmittelbar form- und/oder kraftschlüssig verbunden ist, und wobei der Rahmen (1) mit dem mindestens einen Auflageelement (6, 6') mittelbar oder unmittelbar form- und/oder kraftschlüssig verbunden ist.

12. Anhänger nach Anspruch 11, **dadurch gekennzeichnet, dass** mindestens eine Rampe (16) mit dem Heck-Querträger (8) und/oder dem Rahmen (1) mittelbar oder unmittelbar form- und/oder kraftschlüssig verbunden ist, und/oder
dass mindestens ein Heck-Querträger (8) mittelbar oder unmittelbar form- und/oder kraftschlüssig mit dem Rahmen (1) verbunden ist.

13. Verfahren zur Herstellung eines Anhängers, beispielsweise eines Sattelanhängers oder eines Anhängers mit Zuggabel, unter Nutzung eines Systems nach einem der Ansprüche 1 bis 10, umfassend die folgenden Verfahrensschritte:
- Erzeugung einer mittelbaren oder unmittelbaren form- und/oder kraftschlüssigen Verbindung zwischen dem Rahmen (1) und der mindestens einen Achse (3),
- Erzeugung einer mittelbaren oder unmittelbaren form- und/oder kraftschlüssigen Verbindung zwischen dem Rahmen (1) und dem Schwanenhals (5), und
- Erzeugung einer mittelbaren oder unmittelbaren form- und/oder kraftschlüssigen Verbindung zwischen dem Rahmen (1) und dem mindestens einen Auflageelement (6, 6').

14. Verfahren nach Anspruch 13, **gekennzeichnet durch**, Erzeugung einer mittelbaren oder unmittelbaren form- und/oder kraftschlüssigen Verbindung zwischen dem Rahmen (1) und dem mindestens einen Heck-Querträger (8) und/oder
Erzeugung einer mittelbaren oder unmittelbaren form- und/oder kraftschlüssigen Verbindung zwischen dem Rahmen (1) bzw. dem Heck-Querträger (8) und mindestens einer Rampe (16).

15. Verfahren nach Anspruch 13 oder 14, **gekennzeichnet durch**, Erzeugung einer mittelbaren oder unmittelbaren form- und/oder kraftschlüssigen Verbindung zwischen mindestens zwei Auflageelementen (6, 6').
